# DEMANDE DE BREVET EUROPEEN

(11) **EP 1 052 876 A1**
(43) Date de publication de la demande: **15.11.2000**
(21) Numéro de dépôt: 99440104.0
(22) Date de dépôt: 11.05.1999
(51) Int. Cl.: H04Q 11/04

(54) **Système de transmission tenant compte des exigences des différents trafics supportés, émetteur et récepteur correspondants**

(71) Demandeur: ALCATEL, 75008 Paris (FR)
(72) Inventeur: Balech, Jean-Pierre, 92160 Antony (FR); Genot, Marc, 75003 Paris (FR); Debray, Bertrand, 78600 Maisons Laffite (FR)
(74) Mandataire: Scheer, Luc

(57) **Abrégé**

L'invention concerne notamment un système de transmission permettant la transmission d'un flux de blocs de téléphonie et d'informations de type données en tenant compte des exigences en matière de délai pour la téléphonie.

Selon l'invention, les blocs de téléphonie disponible sont transmis dans le flux prioritairement par rapport à toute information de type données, ces dernières étant transmise lorsque aucun bloc de téléphonie n'est disponible. L'émetteur transmet aussi des indications accompagnatrices du flux permettant de référencer le type d'informations contenu dans chaque emplacement du flux.

## Description

Le domaine de l'invention est celui de la transmission de téléphonie et de données combinées.

Plus précisément la présente invention concerne un système de transmission permettant de tenir compte des exigences propres à la téléphonie tout en assurant à la transmission de données des caractéristiques hauts-débits.

Le service de téléphonie est, dans tout réseau, caractérisé par un débit régulier et des contraintes strictes sur le délai de transmission . Un service de transfert de données repose, par contre, sur un trafic erratique, des exigences en matière de débit en général plus élevées que pour la téléphonie et délai de transmission moins contraignant.

La description suivante se réfèrera au sens descendant d'une communication (d'une station de base vers un terminal) dans un réseau de transmission.

Un mécanisme de transport par voie radio supportant à la fois des communications téléphoniques et des liaisons de données peut par exemple être réalisé grâce à l'émission par une station de base d'une trame TDM dont certains slots sont alloués pour la téléphonie et d'autres pour les informations de type données. Le nombre de slots alloués à un même utilisateur dépendant du débit lui étant attribué. Une telle solution est en général retenue pour les communications orientées circuit. Dans les communications orientées paquet, on peut envisager le transport de la téléphonie comme le transport des données dans des cellules ATM, les cellules ATM étant transmises l'une après l'autre.

L'inconvénient de la première solution est qu'elle est peu adaptée aux transmissions de données à haut débit puisqu'étant à l'origine pensée et dimensionnée pour la téléphonie. La seconde solution, adaptée elle aux hauts débits, présente l'inconvénient d'introduire un retard important dans le transport de la téléphonie. En effet, le débit habituel de la téléphonie de 64kbit/s est obtenu en émettant des cellules ATM contenant 48 octets de charge utile. Cela signifie que pour respecter le débit de 64 kbit/s, on émet une cellule ATM contenant de la téléphonie que toutes les 6 ms. Cette situation est contraire à l'exigence d'un délai de transmission court pour la téléphonie et oblige à l'introduction dans la chaîne de communication d'un annuleur d'écho égalisant les voies de téléphonie afin d'assurer une bonne qualité de communication. Pour une communication orientée paquet, il est cependant impossible de connaître, au niveau de la station de base, la voie sur laquelle l'annuleur d'écho doit être activé. Dans ce cas, il faudrait un annuleur d'écho dans le terminal récepteur, ce qui représente un coût élevé.

La présente invention a pour objectif de proposer un système de transmission, composé d'entités émettrices et d'entités réceptrices, mêlant la transmission de données à haut débit et de données téléphoniques en permettant de respecter les exigences de délai de transmission pour les données de téléphonie.

Cet objectif ainsi que d'autres qui apparaîtront par la suite, est atteint grâce au fait que :
- les blocs téléphoniques composant une communication téléphonique sont transmis dans un flux d'information prioritairement par rapport à toute information de type données dès qu'un bloc de téléphonie est disponible,
- les informations de type données sont, elles, transmises lorsque aucun bloc de téléphonie n'est disponible,
- le flux d'information est accompagné d'indications permettant de situer dans le flux les emplacements occupés par des blocs de téléphonie ou par des informations de type données.

La notion de priorité des blocs de téléphonie doit être entendue à l'échelle des communications téléphoniques en cours et non comme une priorité absolue. Le système est en général dimensionné de telle sorte qu'une certaine bande passante déterminée est réservée pour la téléphonie, le reste de la bande passante étant réservée pour les informations de type données. Ainsi, si la bande passante réservée pour la téléphonie est épuisée, l'établissement d'une nouvelle communication téléphonique n'aura pas la priorité sur la transmission des informations de type données. Par contre pour les communications téléphoniques en cours, la priorité des blocs de téléphonie leur appartenant est assurée par le système.

Ainsi, les données de téléphonie ne sont plus liées à la structure fixe d'une cellule ATM par exemple. Les blocs de téléphonie appartenant à une communication téléphonique en cours ayant la priorité sur les données, on peut choisir la taille des blocs de téléphonie et leur rythme d'émission de façon à satisfaire les contraintes énoncées plus haut.

D'autres caractéristiques et avantages de l'invention apparaîtront à la lecture de la description suivante d'un mode de mise en oeuvre préférentiel donné à titre illustratif et non limitatif, et des dessins annexés dans lesquels :
- la figure 1 représente un système de communication composé d'une station de base émettrice et de terminaux récepteurs d'un flux d'information et de ses indications accompagnatrices selon l'invention,
- la figure 2 représente la structure d'un émetteur selon l'invention,
- la figure 3 représente une réalisation particulière du flux d'information et de ses indications accompagnatrices sous forme de trames composées de deux champs.

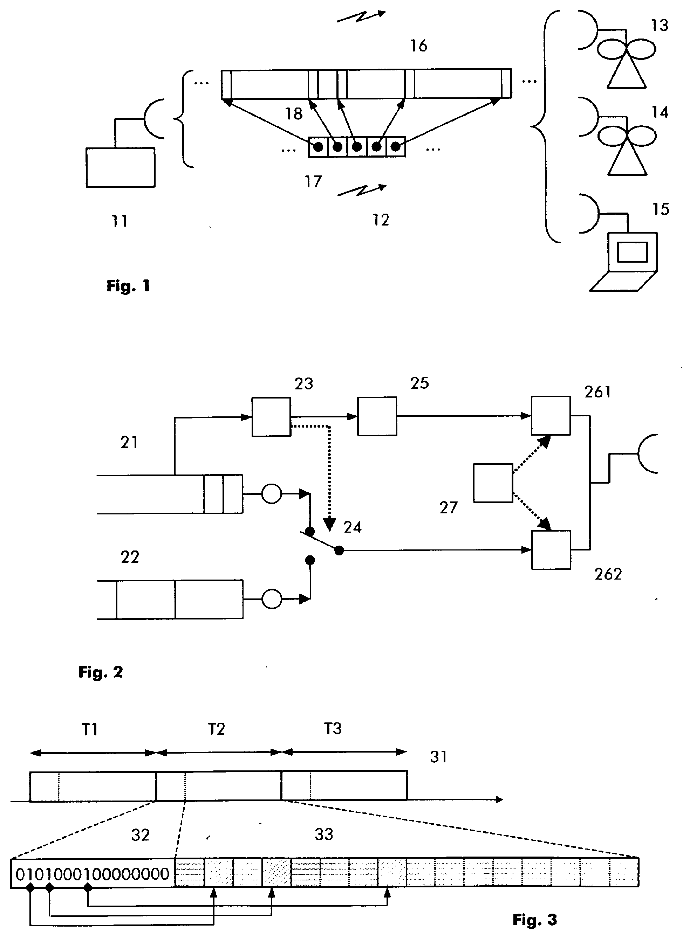

Une illustration du système selon l'invention est donnée au travers de la figure 1 :

Une station de base émettrice 11 est reliée par un canal radio 12 à trois terminaux récepteurs 13, 14, 15. Les récepteurs 13 et 14 sont en mesure de recevoir des information de type téléphonie, le récepteur 15 est en mesure de recevoir des informations de type données. La station de base émettrice 11 transmet, sur le canal radio 12, un flux d'information 16 contenant des blocs de téléphonie et des information de type données dans les emplacements ne contenant pas de blocs de téléphonie. Accompagnant le flux d'information 16, la station de base 11 transmet également sur le canal radio 12 des indications accompagnatrices 17 contenant des moyens 18 de situer, dans le flux d'information 16, les emplacements occupés par les blocs de téléphonie. Le flux ne contenant que des blocs de téléphonie ou des informations de type données, les indications accompagnatrices 17 permettent aux terminaux récepteurs 13, 14, 15 de déterminer de manière suffisante le contenu de tout emplacement du flux. On peut envisager que le flux d'information et les indications accompagnatrices du flux soient transmises simultanément ou qu'elles soient transmises alternativement, le flux étant alors discontinu.

Dans ce mode de réalisation, la station de base 11 diffuse le flux d'information et les indications accompagnatrices du flux à l'ensemble des récepteurs 13, 14, 15. ll est du ressort de chaque récepteur de distinguer, dans le flux, grâce notamment aux indications accompagnatrices du flux, les informations du flux qui lui sont destinées.

Le détail de la station de base émettrice 11 est donné au travers de la figure 2 :

La station de base émettrice dispose de moyens 21 et 22 permettant de distinguer le type d'informations à transmettre. Le moyen 21 peut être modélisé par une file d'attente recueillant les blocs de téléphonie à transmettre et le moyen 22 par une file d'attente recueillant les informations de type données à transmettre. Les moyens 21 et 22 peuvent être mis alternativement en relation, par l'intermédiaire d'un moyen de sélection 24, avec un moyen d'émission 262 de manière à transmettre des informations soit de téléphonie soit de données. Le moyen 21 recueillant les blocs de téléphonie est en relation avec un moyen d'analyse 23 qui détermine à intervalles définis si un bloc de téléphonie est disponible. Si oui, le moyen d'analyse contrôle le moyen de sélection 24 de façon à ce que le bloc de téléphonie soit émis par le moyen d'émission 262. Sinon, le moyen d'analyse contrôle le moyen de sélection 24 de façon à ce que des informations de type données soit émises par le moyen d'émission 262. Le moyen d'analyse 23 est en relation avec un moyen de génération d'indications accompagnatrices du flux 25 lui même en relation avec un moyen d'émission 261. Les moyens d'émission 261 et 262 sont supervisés par un moyen de synchronisation 27 destiné à établir une correspondance temporelle entre les indications accompagnatrices du flux et les emplacements du flux dont elles indique le type des informations contenues.

La forme des indications accompagnatrices du flux doit être telle que les récepteurs soient en mesure, après acquisition de la correspondance temporelle prédéfinie entre le flux et les indications accompagnatrices, de déterminer de manière suffisante le contenu de tout emplacement du flux d'information.

Les informations de type données recueillies dans le moyen 22 peuvent être structurées sous forme de paquets, par exemple paquets IP ou cellules ATM. La contrainte consistant à transmettre prioritairement les blocs de téléphonie par rapport aux informations de type données implique qu'un paquet est transmis de façon morcelée si, durant la transmission du paquet, le moyen d'analyse 23 détecte qu'un bloc de téléphonie doit être transmis. Il est du ressort du système de transmission de mettre à disposition des terminaux récepteurs un moyen de reconnaissance et de reconstruction des paquets. A cet effet, on peut envisager des mécanismes de délimitation de paquets de données, utilisés pour reconstituer les paquets à l'aide de sommes de contrôle, de codes d'erreur d'en-tête ou de codes de redondance cycliques.

Dans un mode de réalisation préférentiel, on peut combiner le flux d'information et les indications accompagnatrices du flux de telle sorte que le tout soit structuré sous forme de trames de longueur constante, chaque trame contenant au moins un champ de charge utile et au moins un champ de signalisation. Tout champ de charge utile contient des informations du flux d'information, à savoir des blocs de téléphonie et les informations de type données et tout champ de signalisation contient des indications accompagnatrices du flux. Le champ de signalisation peut aussi contenir des information de synchronisation permettant au récepteur de retrouver la structure de trame.

Une illustration de ce mode de réalisation est donnée dans la figure 3. Y est représenté ne succession de trois trames de longueur et de structure identiques T1, T2, T3. Le détail du contenu de la trame T2 est représenté. Le champ de signalisation 31 est composé d'une suite de bits, il peut aussi contenir un mot unique non représenté sur la figure permettant au récepteur de retrouver la synchronisation de trame. Le champ de charge utile 32 est subdivisé en intervalles l1... l16 de longueur identique choisis de la longueur d'un bloc de téléphonie. Les intervalles 2, 4 et 8 contiennent des blocs de téléphonie. Les autres intervalles du champ de charge utile contiennent des informations de type données. Les bits du champ de signalisation sont tels que le n^{ième} bit du champ représente le contenu de l'intervalle In du champ de charge utile. Un bit du champ de signalisation à 1 indique un bloc de téléphonie et un bit à 0 indique un intervalle contenant des informations de type données. Il est envisageable que le contenu du champ de signalisation d'une trame qualifie le contenu du champ de charge utile de la même trame ou du champ de charge utile de toute autre trame pourvu qu'il existe un moyen permettant au récepteur de connaître la relation qui lie champ de signalisation et champ de charge utile dans la succession de trames.

Les informations de types données situées dans les emplacements du champ de charge utile de la trame, autres que ceux occupés par des blocs de téléphonie, peuvent correspondre, comme décrit plus haut, au contenu de paquets morcelés par exemple paquets IP ou cellules ATM. Il est alors possible que la transmission du contenu d'un paquet s'étende sur plus d'une trame.

Afin de réduire la quantité d'indications accompagnatrices, il est envisageable de définir une structure de multitrame contenant un nombre défini de trames présentant toutes le même agencement en matière de blocs de téléphonie et d'informations de type données. Le contenu des champs de signalisations des trames de la multitrame définit la composition du champ de charge utile d'une trame de la multitrame et vaut pour l'ensemble des champs de charge utile des trames de la multitrame.

Dans un mode de réalisation particulier, on peut envisager de dimensionner la trame de telle sorte que dans le cas d'une communication téléphonique traditionnelle, présentant un débit de 64 kbit/s, les blocs de téléphonie de longueur prédéterminée appartenant à cette communication sont transmis dans chaque trame toujours au même emplacement de la trame. On retrouve dans ce cas une structure de trame TDM en ce qui concerne la transmission des blocs de téléphonie. Si le bloc de téléphonie a une longueur d'un octet, la longueur de la trame doit être de 125 µs de telle sorte que l'on atteigne le débit de 64 kbit/s. Dans ce cas, la téléphonie est assurée d'un débit de transmission régulier et le retard des blocs de téléphonie est compatible avec l'absence d'annuleur d'écho dans la chaîne de transmission.

## Revendications

1. Système de transmission comprenant un émetteur (11) transmettant à au moins un récepteur (13, 14, 15) un flux d'information (16) comportant à la fois des blocs de téléphonie et des informations de type données,
caractérisé en ce que,
ledit émetteur comporte
- des moyens de sélection (23) permettant de transmettre dans le flux, prioritairement par rapport à toute information de type données, un bloc de téléphonie disponible et de transmettre dans ledit flux des informations de type données lorsque aucun bloc de téléphonie n'est disponible,
- des moyens (25) permettant de générer des indications accompagnatrices du flux (17), référençant le type des informations contenues dans chaque emplacement dudit flux,
- des moyens (261) permettant de transmettre, à chacun desdits récepteurs, lesdites indications accompagnatrices de flux,
ledit système comportant des moyens permettant d'établir la correspondance entre les indications accompagnatrices du flux et les emplacements du flux y étant référencés.

2. Système de transmission selon la revendication 1,
caractérisé en ce que,
ledit flux d'information et lesdites indications accompagnatrices du flux sont agencés en une succession de trames (31) de longueurs identiques, chacune desdites trames comportant un champ de charge utile (33) et un champ de signalisation (32), ledit flux d'information étant contenu dans le champ de charge utile desdites trames et lesdites indications accompagnatrices du flux étant contenues dans le champ de signalisation desdites trames, lesdits blocs de téléphonie appartenant à une même communication téléphonique étant toujours transmis à la même position du champ de charge utile dans chaque trame où ils sont présents.

3. Système de transmission selon la revendication 2
caractérisé en ce que,
les informations de type données sont structurées sous forme de paquets, chaque paquet étant transmis séquentiellement morceau par morceau dans les espaces d'un champ de charge utile non occupés par des blocs de téléphonie, la transmission de chacun desdits paquets pouvant s'étendre sur les champs de charge utile de plusieurs trames consécutives.

4. Système de transmission selon la revendication 3
caractérisé en ce que,
un paquet de données possède des moyens de délimitation en vue de la reconstruction dudit paquet et correspond à une cellule ATM.

5. Système de transmission selon la revendication 3
caractérisé en ce que,
un paquet de données possède des moyens de délimitation en vue de la reconstruction dudit paquet et correspond à un paquet IP.

6. Emetteur pour système de transmission (11) destiné à transmettre à au moins un récepteur (13, 14, 15) un flux d'information (16) comportant à la fois des blocs de téléphonie et des informations de type données,
caractérisé en ce que,
ledit émetteur comporte
- des moyens de sélection (23) permettant de transmettre dans le flux, prioritairement par rapport à toute information de type données, un bloc de téléphonie disponible et de transmettre dans ledit flux des informations de type données lorsque qu'aucun bloc de téléphonie n'est disponible,
- des moyens (25) permettant de générer des indications accompagnatrices du flux (17), référençant le type des informations contenues dans chaque emplacement dudit flux,
- des moyens (261) permettant de transmettre, à chacun desdits récepteurs, les indications accompagnatrices du flux,
ledit émetteur comportant des moyens (27) permettant de définir la synchronisation entre les indications accompagnatrices du flux et le flux.

7. Emetteur pour système de transmission selon la revendication 6
caractérisé en ce que,
ledit flux d'information et lesdites indications accompagnatrices du flux sont agencés en une succession de trames (31) de longueurs identiques, chacune desdites trames comportant un champ de charge utile (33) et un champ de signalisation (32), ledit flux d'information étant contenu dans le champ de charge utile desdites trames et lesdites indications accompagnatrices du flux étant contenues dans le champ de signalisation desdites trames, lesdits blocs de téléphonie appartenant à une même communication téléphonique étant toujours transmis à la même position du champ de charge utile dans chaque trame où ils sont présents.

8. Récepteur pour système de transmission (13, 14, 15) apte à recevoir d'un émetteur (11) un flux d'informations, ledit flux supportant à la fois des blocs de téléphonie et des informations de type données, une partie des informations contenues dans ledit flux étant destinée audit récepteur,
caractérisé en ce que,
le récepteur comporte
- des moyens permettant de recevoir des indications accompagnatrices du flux transmises par ledit émetteur, lesdites indications accompagnatrices du flux référençant le type des informations contenues dans chaque emplacement dudit flux,
- des moyens permettant d'établir la correspondance entre les indications accompagnatrices du flux et les emplacements du flux y étant référencés
- des moyens lui permettant de retrouver les informations lui étant destinées.

9. Récepteur pour système de transmission selon la revendication 8
caractérisé en ce que,
ledit flux d'information et lesdites indications accompagnatrices du flux sont agencés en une succession de trames (31) de longueurs identiques, chacune desdites trames comportant un champ de charge utile (33) et un champ de signalisation (32), ledit flux étant contenu dans le champ de charge utile desdites trames et lesdites indications accompagnatrices du flux étant contenues dans le champ de signalisation desdites trames, lesdits blocs de téléphonie appartenant à une même communication téléphonique étant toujours transmis à la même position du champ de charge utile dans chaque trame où ils sont présents.

10. Récepteur pour système de transmission selon la revendication 9
caractérisé en ce que,
ledit récepteur dispose d'un moyen pour reconstituer un paquet de données morcelé, réparti dans les emplacements des champs de charge utile non occupés par des blocs de téléphonie.
